# EUROPEAN PATENT APPLICATION

(11) **EP 1 983 410 A1**
(43) Date of publication of application: **22.10.2008**
(21) Application number: 06805222.4
(22) Date of filing: 13.11.2006
(51) Int. Cl.: G06F 3/041

(54) **TOUCH FORCE DETECTING APPARATUS FOR INFRARED TOUCH SCREEN**

(30) Priority: 13.01.2006 CN 200610011193
(71) Applicant: Beijing Unitop New Technology Co. Ltd., Chaoyang District Beijing 100016 (CN)
(72) Inventor: YE, Xinlin, Beijing 100016 (CN); LIU, Jianjun, Beijing 100016 (CN); LIU, Xinkun, Beijing 100016 (CN)
(74) Representative: Vandeberg, Marie-Paule L.G.
(86) International application number: PCT/CN2006/003031
(87) International publication number: WO 2007/079641

(57) **Abstract**

The present invention concerns a touch force detecting apparatus for infrared touch screen including: glass plate, sensors, infrared transmitting and receiving diode array, signal processing circuit, microcontroller for controlling the touch screen wherein said sensor is a mechanical force sensor, and its signal output port is connected with an input port of the signal processing circuit; an output port of the signal processing circuit is connected with an I/O interface of the microcontroller for controlling the touch screen.

## Description

### Technical Field

The present invention relates generally to sensor measure and signal processing technology, more especially to a touch force detecting apparatus for infrared touch screen.

### Background Art

As well known, conventional infrared touch screen technology has been used widely. China patent No.00121462.4, 00250806.0, 00200147.6, 00262072.3, 01202252.7, 200420093591.3, 200420117952.3 and United States patent No.3764813, 3860754, 3775560 have disclosed a great number of infrared touch screen technology, including all kinds of modified technical proposals. But in practical situations, infrared touch screens in use are unable to distinguish interference from obstacle object in the environment. For example, a winged insect falling on screen, larger size floater and all other incidental block etc may be regarded as human's fingers on touch screen, leading to incorrect operation. Said incorrect operation of touch screen can not be used in some particular cases, such as industrial control or field usage.

### Summary of the Invention

Therefore , the present invention has been made in view of the above-mentioned problems, and it is an object of the present invention to provide a technical proposal of reducing and even eliminating false touch caused by incidental objects.

The present invention provides a touch force detecting apparatus for infrared touch screen to translate mechanical vibration signal into electric signal.

In order to accomplish these objects, the present invention provides a method to distinguish finger touch from environmental obstacle by detecting whether touch of infrared touch screen is strong hit force. In the present invention, said touch detecting apparatus installed inside the infrared touch screen, includes glass plate, sensor, signal processing circuit, microcontroller for controlling the touch screen. Wherein said sensor is mechanical force sensor, installed at the edge of glass plate of the touch screen; The signal output port of said mechanical force sensor is connected with the input port of said signal processing circuit; The output port of said signal processing circuit is connected with I/O interface of the microcontroller for controlling the touch screen; Wherein said mechanical force sensor is one of the following, strain gauge, pressure or tension sensors, or pickups , and can well be the combination of the above-mentioned sensors.

The present invention realizes the above-mentioned detection by detecting touch force and vibration caused by touch force applying to infrared touch screen and the apparatus for subsidiarily confirming touch incident, wherein said apparatus uses strain gauge, tension or pressure sensors or pickups installed at the edge of safety glass plate of infrared touch screen as the mechanical force sensor. False trigger of touch screen caused by winged insect or floater in the air can be eliminated by said subsidiary apparatus, therefore, the accuracy of touch incident judged by touch screen is increased, meanwhile, touch screen can be applied for some special occasions.

A touch force detecting apparatus for infrared touch screen includes glass plate, sensors, infrared transmitting and receiving diode array, signal processing circuit, microcontroller for controlling the touch screen. Said sensor is mechanical force sensor, and its signal output port is connected with the input port of signal processing circuit; the output port of signal processing circuit is connected with an I/O interface of the microcontroller for controlling the touch screen.

Said touch force detecting apparatus is installed inside the infrared touch screen.

Said mechanical force sensor is strain gauge installed at the edge surface of said glass plate, wherein the detecting direction of the strain gauge is parallel with the edge of the glass plate.

Said mechanical force sensor is mechanical sensor installed between the corner surface of said glass plate and the frame of said touch screen.

Said mechanical force sensor is pressure sensor installed between the corner surface of glass plate and the frame of said touch screen, wherein said frame is inner frame of the touch screen which is located between the glass plate and display.

Said mechanical force sensor is tension sensor installed between the corner surface of the glass plate and the frame of the touch screen, wherein said frame is outer frame of the touch screen which is located in front of the glass plate.

Said mechanical force sensor is pickup installed at the edge of said glass plate.

Said pickup is piezoelectric ceramic slab or capacitance or electromagnetic pickup.

Said signal processing circuit includes: front end circuit including signal amplification circuit and filter circuit; driving circuit including detection circuit, shaping circuit and clamping circuit.

Said signal processing circuit is connected with the selected sensor adapter circuit.

Said mechanical force sensor is the combination of at least two sensors among strain gauge, mechanical sensor and pickup. The technical proposal of the present invention has the advantages of mature technology, low cost and convenient maintenance, therefore being well applied for infrared touch screen system. Infrared touch screen including the above-mentioned touch force detecting apparatus can effectively eliminate interference caused by winged insect, air floater by double detecting modes which detect infrared blocked and force applied to glass plate surface and all kinds of movement with deformed movement produced by force applied. Therefore the touch reliability of touch screen is increased and this kind of screen can be used in special occasions.

The forgoing and other objects, features and advantages of the present invention will become more apparent from the following detailed description when taken in conjunction with the accompany drawings.

### Brief Description of the Drawings

Figure 1 is a schematic view showing an installation location of the strain gauge at the glass plate of the infrared touch screen according to the present invention;
Figure 2 is a cross section schematic view showing an installation structure of the pressure sensor between the glass plate and the inner frame of the infrared touch screen according to the present invention;
Figure 3 is a schematic view showing an installation location of the pressure or tension sensor at the glass plate of the infrared touch screen according to the present invention;
Figure 4 is a schematic view showing an installation location of the pickup at the glass plate of the infrared touch screen according to the present invention;
Figure 5 is a cross section schematic view showing an installation structure of the tension sensor between the glass plate and the outer frame of the infrared touch screen;
Figure 6 is a schematic view showing an electromechanical structure of the whole apparatus according to the present invention;
Figure 7 is a block diagram showing signal processing circuit adopting the pickup according to the present invention;
Figure 8 is a block diagram showing signal processing circuit adopting mechanical sensor according to the present invention.

In which: 101 glass plate ; 102 touch screen frame ; 103 strain gauge ;104 infrared transmitting and receiving diode array; 201 PCB ; 202 pressure sensor ; 203 outer frame ; 204 inner frame ; 205 side frame ; 206 display shell; 207 display surface ; 301 mechanical sensor ; 401 pickup ; 501 pressure sensor ; 601 signal processing circuit ; 602 microcontroller system ; 603 interface channel ; 701 front end circuit ; 702 driving circuit ; 801 mechanical sensor ; 802 front end circuit ; 803 driving circuit ; 804 sensor adapter circuit.

### Detailed Description of the Invention

The following embodiments are used to explain the present invention, but are not used to limit the scope of the present invention.

The present invention has plurality of embodiments.

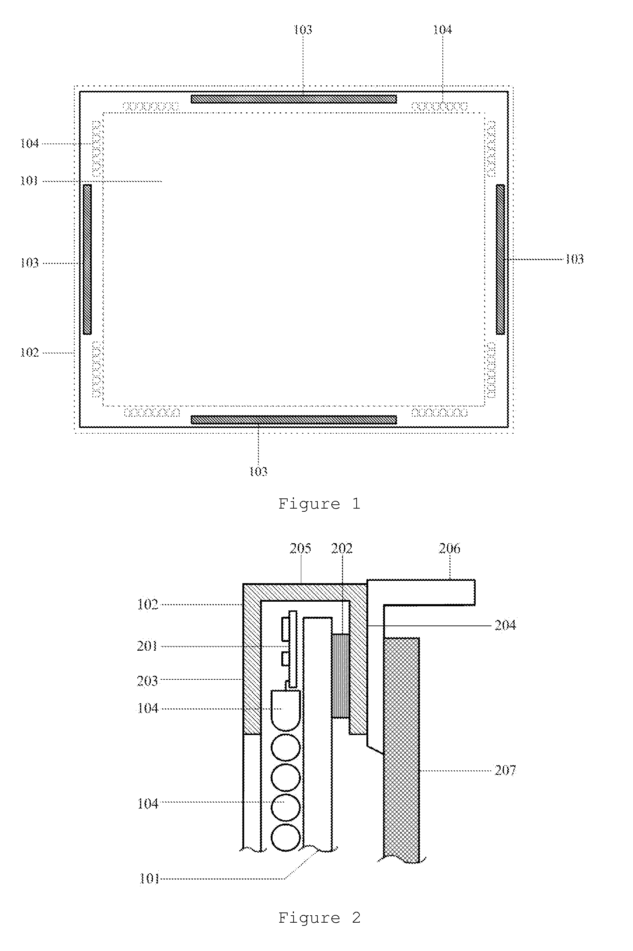

Figure 1 shows an embodiment of using strain gauge as mechanical force sensor to realize touch force detection. For protecting display screen, infrared touch screen generally provides a piece of (steel) glass plate 101 installed at the inner frame 102 ( shown with imaginary line) of the touch screen because of the fragility of the surface of LCD screen, especially when the LCD is used in great number. In this way, strain gauge (also known as resistance strain gauge) 103 is installed at the surface edge of glass plate. As shown in Figure 1 , owing to the edge of glass plate 101 penetrating into the frame 102 used to protect the infrared transmitting and receiving diode array 104, the frame of the touch screen provides protection for the strain gauge. Figure 1 presents an embodiment where four strain gauges 103 are installed at the four surface edges of the glass plate. In a general way, it is good enough for reality demand to install two strain gauges at two adjacent edges, whereas to install four strain gauges gets far better sensitivity and can detect slight touch operation. The amplification magnitude of signal processing circuit or interference-free feature therefore the difficulty of product debugger can be reduced unless better sensitivity is required. However, more strain gauges require higher cost, so the suitable structure arrangement should be selected in accordance with the situation. Since bending moment is mainly produced when glass plate undergoes touch force, the detecting direction of the strain gauge ought to be parallel with the edge of the glass plate. Strip strain gauge with large length-width ratio shown in figure 1 is to raise detection sensitivity of strain gauge and the current strain gauge with normal length-width ratio can be selected in practical application. Wherein sensitivity factor of strain gauge is an important parameter, which is suitable for common touch force making glass plate deformation.

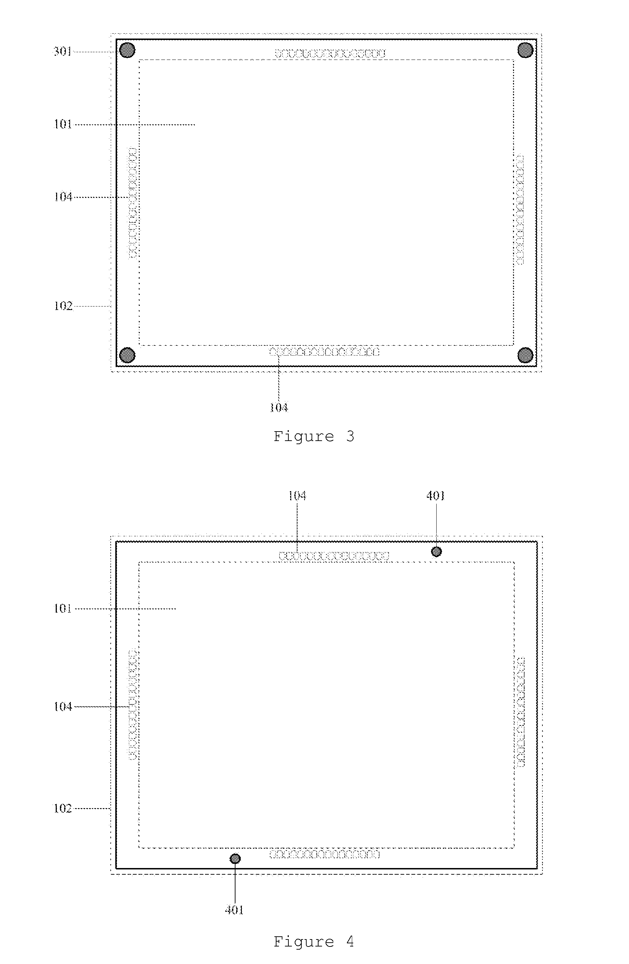

Figure 2 is a sectional schematic view illustrating the installation structure of the pressure sensor 202 installed between the glass plate and the inner frame of the infrared touch screen, in conjunction with figure 3 showing the installation location of the pressure sensor. Infrared touch screen is generally installed at the front of display surface 207, wherein frames 102 have inner side open. Said frames consist of the inner frame 204 located between the glass plate and the display shell 206, the side frame 205 surrounding the glass plate, and out frame 203 located at front of the glass plate. The edge of glass plate, circuit board 201 and infrared transmitting and receiving diode array 104 are surrounded by the frame 102, so glass plate 101 is installed between the inner frame 204 and the outer frame 203. Herein the mechanical force sensor 202, which is a pressure sensor, should be disposed between the surface of said glass plate and inner frame 204 of said touch screen to form the support structure between the glass plate and the frame. According to general mechanical principle, in order to ensure glass plate stability, said support structure ought to be situated at the corner of the glass plate, named as corner part, as shown in figure 3.

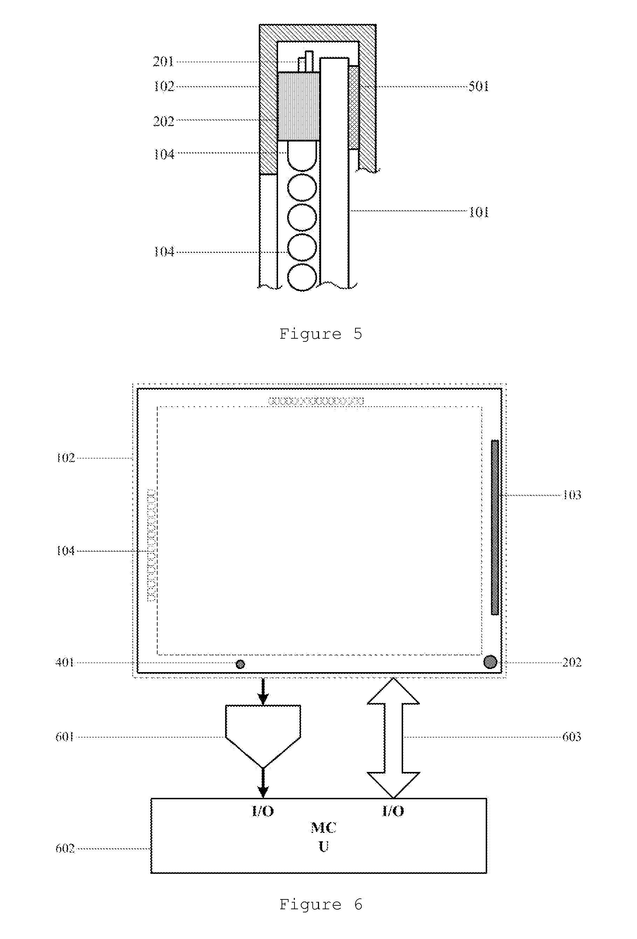

As shown in figure 3, pressure or tension sensor 301 is provided at four corner parts of the glass plate. The touch force applied to touch screen is oriented toward the screen surface, so the pressure sensor is replaced by a tension sensor situated at front of the glass plate and installed between the corner surface of said glass plate and the outer frame of said touch screen, also forming the support of the glass plate, as shown in figure 5. In order to summarily explain the embodiment of the present invention, pressure and tension sensor are named as mechanical sensor in conjunction with figure 2 , figure 3 and figure 5, as 301 shown in figure 3.

In figure 4, glass plate is provided with very high Young's modulus, namely with very high intensity and elasticity, and its surface has a certain friction coefficient, so the vibration of the glass plate would unavoidably be produced when touch force is acted to the glass plate, no matter said touch is single touch or continuous sliding touch. So pickup is used as mechanical force sensor to detect the vibration caused by force applied to the glass plate, as shown in figure 4 wherein pickup is installed at the edge of the glass plate to judge whether touch incident occurs or not. The figure shows two pickup 401 to raise detecting sensitivity. In fact mechanical shock conducted in the glass plate has little loss, so only one pickup is enough. Wherein pickup can choose low cost piezoelectric ceramic sensor, or choose condenser pickup or electromagnetic pickup with better low frequency response, but the latter pickups cost more and are susceptible to the inference of environment noise.

As shown in figure 5, a pressure sensor or a tension sensor 501 is disposed between the surface of said glass plate 101 and the frame 102 of said touch screen, forming the support structure between the glass plate and the frame.

Figure 6 presents a block diagram showing the structure of whole apparatus. All kinds of mechanical force sensors used in the present invention are normalized as signal source at a piece of glass plate, without distinguishing the type of the mechanical force sensors. In fact, the above-mentioned application can well be a technical proposal, in this way at least two sensors among strain gauge, force sensor and pickup are combined to detect touch or strike force ,utilizing the advantages of all kinds of sensors.

As shown in figure 6, through interface channel 603, microcontroller system 602 and other devices in the infrared touch screen, such as infrared transmitting and receiving diode array, transmitting diode driving circuit and receiving diode signal processing circuit form the overall touch screen system in prior art. The present invention rejoins the subsystem including mechanical force sensor and its signal processing circuit 601 to the touch screen system in prior art, in order to realize the vibration detection caused by touch force applied to the glass plate , which is a requirement of triggering touch screen and wherein the output port of signal processing circuit is connected with I / O interface of microcontroller. If only microcontroller detects electrical signal outputted from the I / O interface, baffled infrared is confirmed by manipulator, thereby touch operation is performed. Therefore, the electrical signal outputted by said I /O interface has "and" relation with electrical signal generated by baffled infrared of touch screen; Said relation is accomplished by software code of the microcontroller.

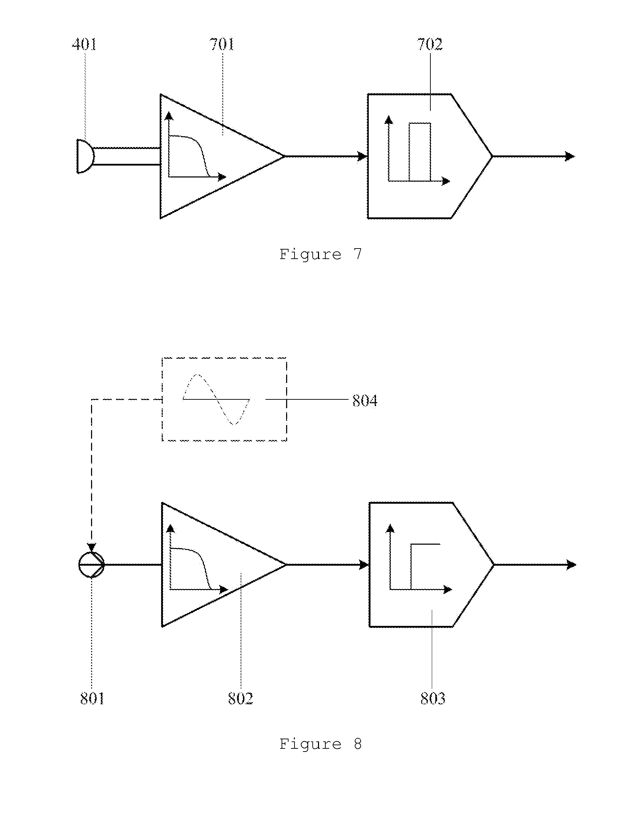

The signal processing circuit 601 in figure 6 varies from different mechanical force sensor. If pickup is chosen as sensor, basic structure of the signal processing circuit is shown in as figure 7.

As shown in figure 7, the signal processing circuit consists of front end circuit 701 and driving circuit 702. The front end circuit 701 including signal amplification and filter circuit is cascaded with driving circuit 702 including detection circuit, shaping circuit and clamping circuit. Of course, in view of design mobility of electronic circuit, the division of the above block is not unique, for example, detection part in the driving circuit 702 can be incorporated in the front end circuit 701. The design principle conforms to flow path of signal transmission and enable circuit working. Since amplification and filter process of acoustic frequency or infrasonic frequency signal and also interface problem of microcontroller belong to prior art , the present invention does not illustrate specific circuit structure, referring to AGC circuit, ALC circuit, infrared remote control or acoustic control switch etc, for instance one-volume edition of "electric paper" annually published by Chengdu University of Science and Technology Press and Electric University of Science and Technology Press, "wireless radio" monthly published by Posts and Telecom Press.

Figure 8 shows the corresponding signal processing circuit of strain gauge or mechanical sensor. Said circuit in figure 8 has the following difference with that in figure 7 : In figure 8, the strain gauge or mechanical sensor 801 connected with the input port of front end circuit 802 including signal amplification, filter circuit, demodulation or detecting circuit is also connected with a selective match sensor adapter circuit 804 (represent selective match with imaginary line). In a general way, the function of said sensor adapter circuit is to provide the most suitable working condition for sensors. For example, for electric resistance strain gauge, an AC (alternating current) supply offers the detecting current, so that next circuit can utilize alternating current amplifier which is low cost and easily debugged, instead of direct-current amplifier liable to generate direct current offset; For mechanical sensor having capacitance structure, a high voltage supply offers polarization voltage; Whereas for pickup having piezoelectric ceramic structure, it requires a input port of high input impedance. In this way , the internal structure of the above front end circuit 802 varies from sensors. But the above-mentioned content is also mature technology. For example, strain gauge is used as sensor, referring to "strain electrical measurement and sensing technique" ISBN 7 - 5026 - 0630 - 0 / TM 5 , by Maliang cheng , at 1993) published by China Measurement publisher. Whereas if mechanical sensor is used, circuit design demands user's guide or technical information provided by enterprise because the uniform criteria is not formed and the products of various enterprise currently can not be used widely. Front end circuit 802 outputs the general electrical signal demodulated or detected, then said general electrical signal is transformed into standard level signal by driving circuit 803 including clamping, shaping circuit, which is connected with I / O interface of the microcontroller.

To accomplish the objects of the present invention, the above-mentioned preferred embodiments have been detailed description, but we know, other miscellaneous parts is added to whole production program, such as program design of microcontroller according to the present invention, all kinds of chip selected and EMC design etc.

The present invention can also be other embodiments, for example, in some application environment, infrared touch screen do not need safety glass plate, herein, said mechanical force sensor could directly be installed on the glass plate lied at the surface of display screen.

### Industrial Applicability

In accordance with the present invention, a touch force detecting apparatus is used to subsidiarily confirm touch incident by detecting touch force and vibration caused by touch force applied to infrared touch screen. Said apparatus adopts strain gauge, tension or pressure sensor or pickup as mechanical force sensor installed at the edge of safety glass plate of infrared touch screen. Infrared touch screen with said touch force detecting apparatus could eliminate false trigger caused by winged insect or floater in the air, the accuracy of judging touch incident is increased. The invention has the advantages of mature technology, low cost and convenient maintenance. Hence, the present invention is well suited for applying for infrared touch screen system.

## Claims

1. A touch force detecting apparatus for infrared touch screen including: glass plate, sensors, infrared transmitting and receiving diode array, signal processing circuit, microcontroller for controlling the touch screen , **characterized in that** said sensor is mechanical force sensor, and its signal output port is connected with a input port of the signal processing circuit; an output port of signal processing circuit is connected with an I/O interface of the microcontroller for controlling the touch screen.

2. The touch force detecting apparatus of claim 1, **characterized in that** said touch force detecting apparatus is installed inside the infrared touch screen.

3. The touch force detecting apparatus of claim 1, **characterized in that** said mechanical force sensor is strain gauge installed at the surface of the edge of the glass plate, wherein the detecting direction of the strain gauge is parallel with the edge of the glass plate.

4. The touch force detecting apparatus of claim 1, **characterized in that** said mechanical force sensor is mechanical sensor installed between the corner surface of said glass plate and the frame of said touch screen.

5. The touch force detecting apparatus of claim 1, **characterized in that** said mechanical force sensor is a pressure sensor installed between the corner surface of glass plate and the frame of said touch screen, said frame is inner frame of the touch screen which is located between glass plate and display.

6. The touch force detecting apparatus of claim 1, **characterized in that** said mechanical force sensor is a tension sensor installed between the corner surface of the glass plate and the frame of said touch screen, said frame is outer frame of the touch screen, which is located at front of the glass plate.

7. The touch force detecting apparatus of claim 1, **characterized in that** said mechanical force sensor is a pickup installed at the edge of said glass plate.

8. The touch force detecting apparatus of claim 7, **characterized in that** said pickup is piezoelectric ceramic slab or condenser pickup or electromagnetic pickup.

9. The touch force detecting apparatus of claim 1, **characterized in that** said signal processing circuit includes: front end circuit including signal amplification, filter circuit; and driving circuit including demodulation circuit, shaping circuit and clamping circuit.

10. The touch force detecting apparatus of claim 1 or claim 9, **characterized in that** said signal processing circuit is connected with the selected sensor adapter circuit.

11. The touch force detecting apparatus of claim 3, claim 4 or claim 7, **characterized in that** said mechanical force sensor is the combination of at least two sensors among strain gauge, mechanical sensor and pickup.
